Europäisches Patentamt

European Patent Office

Office européen des brevets

(11) Numéro de publication: **0 419 362 A1**

# DEMANDE DE BREVET EUROPEEN

(21) Numéro de dépôt: 90402605.1

(51) Int. Cl.5: **E05D 3/06**

(22) Date de dépôt: 20.09.90

(30) Priorité: 20.09.89 FR 8912355

(43) Date de publication de la demande:
27.03.91 Bulletin 91/13

(84) Etats contractants désignés:
AT BE CH DE LI

(71) Demandeur: **Praud, Noel**
**Zone Artisanale**
**F-85190 Venansault(FR)**

Demandeur: **Praud, Pascal**
**La Rose Bel-Air**
**F-85190 Venansault(FR)**

(72) Inventeur: **Praud, Noel**
**Zone Artisanale**
**F-85190 Venansault(FR)**
Inventeur: **Praud, Pascal**
**La Rose Bel-Air**
**F-85190 Venansault(FR)**

(74) Mandataire: **Nony, Michel et al**
**Cabinet NONY & CIE, 29, rue Cambacérès**
**F-75008 Paris(FR)**

(54) Dispositif d'assemblage de pièces de bois ou analogue.

(57) L'invention concerne un assemblage de deux pièces de bois ou autre et notamment un assemblage angulaire pour poutres.

Selon l'invention, on dispose sur chaque pièce à assembler des moyens susceptibles d'appuyer élastiquement chacune des pièces sur l'autre, notamment des faux tenons (4) montés de manière à rattraper de façon permanente les variations dimensionnelles locales desdites pièces et à maintenir le même contact entre elles.

L'invention s'applique notamment aux poutres ornementales de cheminées.

Fig. 4

## DISPOSITIF D'ASSEMBLAGE DE PIÈCES DE BOIS OU ANALOGUE.

La présente invention concerne un assemblage de deux pièces de bois ou analogue, notamment un assemblage angulaire pour poutre ornementale de cheminée.

Les assemblages utilisés en charpente sont choisis en fonction du rôle des pièces qu'ils réunissent ainsi que des efforts supportés par ces pièces à l'endroit des assemblages. Une simple coupe plate est possible et satisfaisante pour assembler un poteau et une poutre que celui-ci doit soutenir eu-son milieu puisqu'alors les efforts subis par le poteau tendent à le maintenir en place. Par contre, des entailles sont préférables pour bien positionner une contre-fiche de manière que, là encore, les efforts subis par celle-ci tendent à la maintenir en bonne position.

Mais les assemblages ainsi connus ne sont pas efficaces losqu'il s'agit d'assembler des pièces n'ayant pratiquement pas d'efforts à transmettre de l'une à l'autre. En effet, dans ce cas, l'assemblage choisi doit assurer seul la liaison entre les poutres ou parties de poutres et ce, alors que chaque poutre ou partie de poutre risque de subir, dans le temps, des tensions différentes qui peuvent aboutir à des déformations locales et mettre en jeu l'assemblage lui-même.

Il est vrai qu'un problème analogue se pose en menuiserie où l'assemblage assure seul le contact de pièces assemblées. Mais dès qu'il s'agit de pièces d'importance, l'assemblage doit être doublé par des ferrures comme dans toute la menuiserie dite mobile.

La présente invention a pour but de proposer un mode d'assemblage de deux pièces de bois ou analogue n'ayant pratiquement pas d'efforts à transmettre de l'une à l'autre, cet assemblage assurant un contact permanent entre les dites pièces assemblées, quelles que soient les contraintes locales auxquelles elles peuvent être soumises.

En particulier, un tel assemblage est recommandé pour des poutres de cheminées qui sont soumises localement, notamment dans les cheminées à foyer fermé, à des variations très importantes de température aboutissant à un "travail" du bois tel que les assemblages classiques se défont plus ou moins, aggravant encore les fentes et autres effets de ces variations de température.

Suivant l'invention, on dispose sur chaque pièce à assembler, des moyens susceptibles d'appuyer élastiquement chacune des deux pièces sur l'autre de manière à rattraper de façon permanente les variations dimensionnelles locales qui pourraient se produire et à maintenir toujours ainsi le même contact entre les dites pièces.

Dans une réalisation intéressante de l'inventionl les moyens de serrage élastique sont constitués par au moins deux faux tenons qui sont montés libres dans des logements pratiqués sur l'une et l'autre pièce à assembler, et sont solidarisés avec les dites pièces par des chevilles qui, grâce à l'emplacement des trous dans lesquels elles s'enfoncent à travers, à la fois, les deux pièces à assembler et les faux tenons, exercent une double traction de sens opposé sur les dits faux tenons et assurent ainsi le serrage de chacune des deux pièces assemblées sur l'autre.

Suivant une autre réalisation de l'invention, les faux tenons s'engagent dans des mortaises dont le profil est sensiblement identique à la section des faux tenons.

De préférence, cette section est constituée de deux queues d'aronde symétriques opposées l'une à l'autre et les angles des trapèzes isocèles constituant les queues d'aronde des faux tenons sont identiques aux angles des trapèzes isocèles constituant les queues d'aronde des mortaises, les seules différences entre section des faux tenons et profil des mortaises étant, d'une part, que les arêtes d'entrée des mortaises sont arrondies et d'autre part, que la hauteur des trapèzes constituant le profil des mortaises est plus élevée que celle des trapèzes constituant la section des tenons.

On obtient ainsi un serrage efficace des pièces assemblées dans toute les zones s'étendant autour des entrée des mortaises et ce serrage est bien supérieur aux forces de frottements lors de l'encastrement des faux tenons, ceux-ci agissant pratiquement comme des clefs et non pas seulement comme des tenons.

Il est également possible, suivant l'invention, de diminuer les forces de frottement entre faux tenons et mortaises lors de leur encastrement en les réalisant en deux ou même en trois pièces.

D'autres caractéristiques et avantages de l'invention apparaîtront au cours de la description qui va suivre en se référant aux planches jointes illustrant deux exemples, donnés à titre purement indicatif et nullement limitatif, de réalisation de la présente invention.

La figure 1 est une vue en élévation d'une poutre ornementale en bois pour cheminée.

La figure 2 est une vue suivant la ligne II-II de la figure

La figure 3 est une coupe à grande échelle suivant la ligne III-III de la même figure 1.

La figure 4 est une coupe suivant la ligne IV-IV de la figure 3, en position de montage avant chevillage définitif.

La figure 5 est une coupe suivant la même ligne IV-IV de la figure 3, après chevillage définitif.

Les figures 6, 7 et 8 montrent une variante de réalisation, les figures 6 et 7 correspondant aux deux étapes principales de cette réalisation et la figure 8 illustrant le rôle des différentes pièces du montage.

Les figures 9 et 10 montrent une variante de détail, la figure 10 étant une vue suivant X-X de la figure 9.

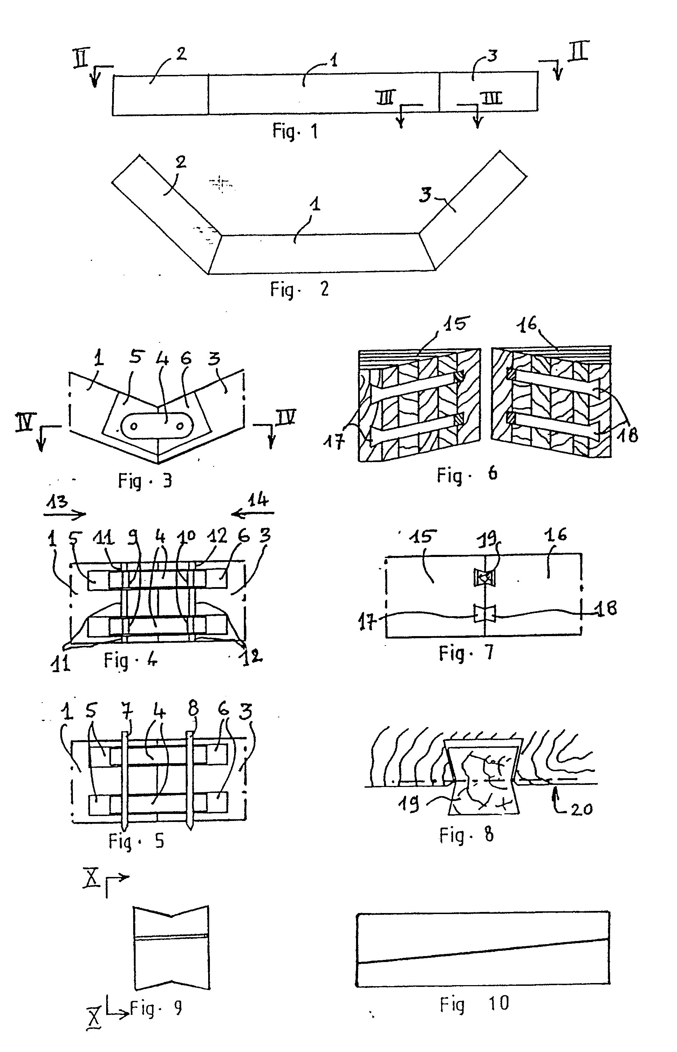

La poutre illustrée figures 1 et 2 se compose d'une partie médiane 1 et de deux parties d'extrémité 2 et 3.

L'assemblage de la partie médiane et de chaque partie d'extrémité se fait au moyen de deux faux tenons 4 en contreplaqué de plusieurs couches et on voit, sur la figure 4, l'un des faux tenons assurant l'assemblage de la partie médiane 1 et de la partie d'extrémité 3. Le dit faux tenon est logé librement dans la mortaise 5 de la partie médiane 1 et dans la mortaise 6 de la partie d'extrémité 3.

Ce dit faux tenon possède deux trous 9 et 10 de passage des chevilles dont l'écartement est plus petit que l'écartement entre les trous de passage 11 et 12 des mêmes chevilles dans la partie médiane 1 et dans la partie d'extrémité 3, lorsque celles-ci sont en position d'assemblage.

Concrètement, pour une poutre de cheminée de 20 centimètres de section, on peut utiliser des faux tenons en contreplaqué de sept couches. Les chevilles, droites de fil, présentent un diamètre de 18 millimètres avec une extrémité pointue pour faciliter leur mise en place. Les trous de passage des dites chevilles ont 18 millimètres de diamètre et ont leurs axes écartés de 45 millimètres alors que, lorsque la poutre est en position d'assemblage, la distance entre les trous 11 et 12 est de 60 millimètres.

Lorsque les chevilles sont en place, les trous de passage de celles-ci se sont plus ou moins ovalisés en fonction des épaisseurs de matière et le bois a été quelque peu maté à la fois sur les faux tenons, sur les pièces assemblées et sur les chevilles.

Compte tenu de la nature des matériaux en présence, lorsque les deux chevilles sont en place, la cheville 7 opère, sur la partie d'extrémité 3, une traction dans le sens de la flèche 14 par l'intermédiaire des faux tenons 4, tandis que la cheville 8 opère une traction sur la partie médiane 1 dans le sens de la flèche 13 par l'intermédiaire des mêmes faux tenons 4.

Ainsi, les extrémités des deux pièces 1 et 3 sont-elles appuyées fortement l'une contre l'autre de façon constante. Mais cet appui est suffisamment élastique pour absorber de façon permanente les variations dimensionnelles locales dues aux conditions ambiantes comme le montrent les essais effectués puisqu'après plus de quatre mois dans une atmosphère dont la température a varié de 25 à 40°C et dont l'humidité était de l'ordre de 30 %, quatre poutres stockées debout sur leurs parties d'extrémité n'ont montré aucun jeu à la jonction de la partie médiane et des parties d'extrémité.

Les figures 6 à 8 illustrent une toute autre variante s'appliquant notamment à l'assemblage de pièces de bois dit "lamellé collé"..

Comme il apparaît sur la figure 6, on pratique d'abord des mortaises 17 et 18 en queue d'aronde sur chacune des pièces 15 et 16 à assembler.

On prépare par ailleurs deux faux tenons 19 avec une section constituée de deux queues d'aronde à l'opposé l'une de l'autre, cette section étant pratiquement identique (figure 8), notamment en ce qui concerne les angles des trapèzes constituant les différentes queues d'aronde, au profil que présentent les mortaises 17 et 18 lorsque les pièces 15 et 16 sont en position d'assemblage..

Il y a cependant deux petites différences entre profil des mortaises et section des faux tenons. D'une part, les arêtes d'entrée des mortaises sont arrondies et d'autre part, la hauteur des trapèzes constituant le profil des mortaises est plus élevée que celle des trapèzes constituant la section des faux tenons correspondants.

Les raisons de ces différences apparaissent sur la figure 8 où l'on voit que le faux tenon 19 peut coulisser librement dans sa mortaise correspondante lorsqu'il n'est pas dans sa position normale de travail, son milieu (concrétisé par un trait mixte) ne correspondant pas à la face 20 de la pièce à assembler.

En effet, si le profil des mortaises était rigoureusement identique à la section des faux tenons, il serait impossible de faire entrer ceux-ci dans celles-là. Pour que cela soit possible, il faut que les faux tenons soient, au plus, circonscrits au profil des mortaises.

En cassant les arêtes d'entrée des mortaises, on permet le passage des faux tenons au niveau de ces entrées, et en augmentant la profondeur des mortaises, on supprime tout frottement des faux tenons sur les fonds des dites mortaises.

Pour faciliter le début de la mise en place des faux tenons, on en réduit préalablement la section sur tous les côtés à l'une de leurs extrémités.

Dans ces conditions le montage s'effectue dans les conditions définies ci-après.

On rapproche les pièces 15 et 16 de telle manière que les mortaises 17 et 18 soient disposées face à face (figure 7) et on présente les faux tenons 19, par leur extrémité de section réduite, devant les orifices ainsi formés par les dites mortaises.

Lorsque l'on arrive à la section normale, les côtés inclinés des faux tenons commencent à appuyer sur les flancs des mortaises, provoquant le rapprochement des pièces 15 et 16.

L'enfoncement des faux tenons est analogue à celui d'un coin qui développe à l'encontre de son avancement, des efforts bien inférieurs à ceux qu' il développe perpendiculairement à cet avancement.

Lorsque les faux tenons sont en place dans les mortaises, la pression qu'ils exercent sur les flancs de celles-ci et qui appuye les deux pièces 15 et 16 l'une sur l'autre, se répartit dans les zones autour des entrées des mortaises dans les pièces assemblées et cette pression est telle que les faux tenons assurent non seulement leur rôle de pièces d'assemblage, mais aussi celui de véritables clefs en bloquant les deux pièces 15 et 16 l'une contre l'autre, et ce, au niveau de chaque "lame" du "lamellé-collé".

Concrètement, on a assemblé angulairement à 120°, deux morceaux de poutre en lamellé collé chêne d'une longueur de 25 centimètres et d'une section de 20 centimètres par 20, avec deux faux tenons en double queue d'aronde isocèle dont chacune avait une grande base de 26 millimètres, une hauteur de 14 millimètres et des angles de 75 et 105°, chaque mortaise, également isocèle, ayant une grande base de 30 millimètres , une hauteur de 15 millimètres et des angles identiques à ceux des faux tenons.

Les différentes pièces stockées plusieurs jours à une température ambiante de 20°C et une hygrométrie de 50% environ, ont été assemblées à sec.

L'ensemble a été alors placé à moins 30°C pendant 4 heures, puis à plus 260°C pendant 2 heures. A la sortie, on n'a constaté aucun jeu entre faux tenons et mortaises, ce qui signifie que le dispositif d'assemblage avait absorbé les variations de cote qui ont pu se produire le traitement auquel l'ensemble a été soumis Il existait seulement un décalage de moins d'un demi-millimètre à la pointe des deux faces accolées, chaque morceau de poutre ayant "travaillé" en sens contraire.

Il est entendu que l'on peut, sans sortir de l'invention, modifier des détails de construction ou leur fonctionnement en vue d'obtenir un même résultat.

Les figures 9 et 10 montrent, par exemple, une variante de réalisation d'un faux tenon des figures 6 à 8. Au lieu d'être en une seule pièce, il est constitué de deux pièces en forme de coin. De cette manière, on met en place l'une des pièces et l'on enfonce l'autre. Les frottements sont ainsi diminués et l'on peut augmenter la pression exercée par ce tenon en enfonçant la seconde pièce plus loin que la première.

On pourrait même réaliser ces tenons en trois pièces soit deux pièces latérales et une pièce centrale en forme de coin. Dans ce cas, il serait préférable de donner une pente de 1 % à la pièce centrale afin d'assurer le blocage de l'ensemble.

Les chevilles, cylindriques sur la réalisation des figures 3 à 5, pourraient avoir une toute autre section, par exemple rectangulaire avec un petit côté arrondi. Il suffirait, alors, de prévoir en conséquence la section des trous de passage à travers les faux tenons et les pièces à assembler.

Les exemples illustrés ne concernent que des assemblages angulaires Il est bien évident que l'on pourrait assembler des moises entre elles avec des faux tenons suivant l'invention, de même que l'on pourrait accoler deux planches voisines en solidarisant leurs extrémités, notamment avec des faux tenons analogues à ceux des figures 6 à 10.

## Revendications

1. Dispositif pour l'assemblage de deux pièces de bois ou analogue caractérisé en ce qu'il comprend des moyens (4) susceptibles d'assurer un serrage élastique de chacune des deux pièces (1,2 ; 1,3) l'une sur l'autre.

2. Dispositif suivant la revendication 1 caractérisé en ce que les dits moyens comprennent au moins deux faux tenons.

3. Dispositif suivant la revendication 2 caractérisé en ce que les dits faux tenons sont, montés librement dans des logements (5,6) prévus sur les pièces à assembler et solidarisés avec elles par des chevilles qui se mettent en place en passant à travers des trous (9,10) décalés de telle manière que chaque cheville assure, par les faux tenons à travers lesquels elle passe, une traction, vers la pièce sur laquelle elle est montée, de la pièce opposée.

4. Dispositif suivant la revendication 2 caractérisé en ce que les faux tenons s'engagent dans des mortaises dont le profil est sensiblement identique à la section des dits tenons.

5. Dispositif suivant la revendication 4 caractérisé en ce que la section des faux tenons (19) est constituée de deux queues d'aronde symétriques.

6 Dispositif suivant la revendication 5 caractérisé en ce que les angles des trapèzes constituant la section des faux tenons sont identiques aux angles des trapèzes constituant le prof il des mortaises (17,18).

7. Dispositif suivant la revendication 6 caractérisé en ce que le profil des mortaises et la section des faux tenons présentent des grands angles dont la valeur se situe entre 100 et 120° et soit, de préférence, de l'ordre de 105°, et des petits angles dont la valeur se situe entre 60 et 80° et soit, de préférence, de l'ordre de 75°.

8. Dispositif selon l'une des revendications 4 à 7 en bois dit "lamellé collé" caractérisée en ce que les mortaises d'assemblage sont perpendiculaires aux "lames" de bois.

9. Dispositif selon l'une des revendications précédentes caractérisée en ce que toutes les pièces qui la composent sont en bois.

10. Poutre ornementale pour cheminée constituée d'une pièce médiane (1) et de deux pièces d'extrémité (2,3) caractérisée en ce que la dite pièce médiane et les pièces d'extrémité sont assemblées par des dispositifs d'assemblage suivant l'une des revendications précédentes.

Fig. 1

Fig. 2

Fig. 3

Fig. 6

Fig. 4

Fig. 7

Fig. 5

Fig. 8

Fig. 9

Fig 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|-------------------------------------------------------------------------------|------------------------|--------------------------------------|
| A | EP-A-0206859 (GUIDOTTI)<br>* abrégé; figure 5 *<br>--- | 1 | E05D3/06 |
| A | FR-A-2194252 (RENAULT)<br>* page 2, lignes 28 - 36; figure 1 *<br>----- | 1 | |

DOMAINES TECHNIQUES
RECHERCHES (Int. Cl.5)

F16B
E05D

Le présent rapport a été établi pour toutes les revendications

| Lieu de la recherche | Date d'achèvement de la recherche | Examinateur |
|----------------------|-----------------------------------|-------------|
| BERLIN | 12 DECEMBRE 1990 | BLURTON M.D. |

EPO FORM 1503 03.82 (P0402)